# EUROPÄISCHE PATENTSCHRIFT

(11) **EP 1 821 395 B1**
(45) Veröffentlichungstag und Bekanntmachung des Hinweises auf die Patenterteilung: **05.04.2017**
(21) Anmeldenummer: 07003102.6
(22) Anmeldetag: 14.02.2007
(51) Int. Cl.: H02K 49/06

(54) **Verfahren zum Einstellen eines Bremsmomentes und Magnethysteresebremse**
Method for adjusting a braking torque and magnetic hysteresis brake
Procédé destiné au réglage d'un couple de freinage et frein à hystérèse magnétique

(30) Priorität: 21.02.2006 DE 102006007924
(43) Veröffentlichungstag der Anmeldung: 22.08.2007
(73) Patentinhaber: Zhuolang Intelligent Machinery Co., Ltd., Jintan City (CN)
(72) Erfinder: Felber, Christian, 87527 Sonthofen (DE); Schmieger, Christian, 87463 Probstried (DE)
(74) Vertreter: Hamann, Arndt

(56) Entgegenhaltungen:
- WO-A1-98/36488
- US-A- 2 607 820
- US-A- 5 400 876
- US-A- 5 873 436

## Beschreibung

Die Erfindung betrifft ein Verfahren zum Einstellen des Bremsmomentes einer permanent erregten Magnethysteresebremse mittels mechanisch wirkendem Stellglied sowie eine permanent erregte Magnethysteresebremse nach dem Oberbegriff des Anspruchs 2.

Hysteresebremsen erlauben die Einhaltung einer gleichbleibenden Anspannung, ohne das Garn mit einer Reibung zu beaufschlagen, die das Garn schädigen kann. Das Garn passiert die Magnethysteresebremse mit einer vorgegebenen Geschwindigkeit. Dabei ist das Garn über eine Laufrolle geführt, wobei es die Laufrolle ganz oder teilweise umschlingt und mit der Bremswirkung der Magnethysteresebremse beaufschlagt wird. Das Bremsmoment ist drehzahlunabhängig.

Hysteresebremsen werden in der Textilindustrie zum Beispiel bei der Zwirnherstellung oder dem Aufwickeln von Garn auf Spulen eingesetzt.

Die US 2 607 820 A offenbart eine Magnethysteresebremse mit einem Stellglied zur Einstellung des Bremsmomentes.

Die DE 19705290 A1 beschreibt eine dauermagneterregte Hysteresebremse mit einer Laufrolle, einem Hysteresering und einem mit Magnetpolen versehenen Magnetring. Der Hysteresering ist mit der Laufrolle drehfest verbunden. Der Magnetring ist auf einem Trägerteil befestigt, das relativ zum Hysteresering mittels einer Verstelleinrichtung axial verschiebbar gelagert ist. Die Verstelleinrichtung umfasst einen Gewindeansatz am Trägerteil und eine Gewindespindel an einem Einstellring, der axial feststeht, aber drehbar ist. Durch Drehen des Einstellrings wird der Magnetring relativ zum Hysteresering verschoben. Die Verschiebung bewirkt eine Veränderung des Bremsmomentes der Hysteresebremse. Die axiale Anordnung der Laufrolle wird mittels einer zentralen Schraube, die die Laufrolle gegen eine zentrale Axialfeder drückt, eingestellt. Das Drehen der Schraube ermöglicht eine Grundeinstellung der Eintauchtiefe des Magnetrings in den Hysteresering und damit eine Kalibrierung der Hysteresebremse. Bei der Hysteresebremse der DE 19705290 A1 ist es erforderlich, für die Einstellung des Bremsmomentes für den Betrieb und für die Einstellung des Bremsmomentes bei der Kalibrierung zwei unterschiedliche Verstelleinrichtungen bereit zu halten und zu betätigen.

Ausgehend vom vorgenannten Stand der Technik liegt der Erfindung die Aufgabe zu Grunde, die Magnethysteresebremse für das Einstellen des Bremsmomentes zu verbessern.

Diese Aufgabe wird durch das Verfahren nach Anspruch 1 und die permanent erregte Hysteresebremse nach Anspruch 2 gelöst.

Vorteilhafte Ausbildungen der Erfindung sind Gegenstand der Unteransprüche.

Die bei der bisher bekannten Magnethysteresebremse für das Einstellen des Bremsmomentes auf einen gewünschten Wert für den Betrieb der Magnethysteresebremse erforderlichen zusätzlichen Bauteile wie separate Stellglieder und Verstelleinrichtungen für die Kalibrierung entfallen bei der erfindungsgemäßen Magnethysteresebremse und die Kosten dafür werden eingespart. Die Handhabung der Magnethysteresebremse wird vereinfacht.

Weist das Stellglied eine Skala auf und umfasst die Magnethysteresebremse einen Deckel, der eine Markierung trägt, und sind die Skala und die Markierung so angeordnet, dass sie als Anzeigeeinrichtung zusammenwirken, ist eine genaue und reproduzierbare Einstellung bestimmter Bremsmomente möglich.

Erfindungsgemäß weist die Magnethysteresebremse eine Verbindung zwischen dem Deckel und der Achse auf, die in Abhängigkeit vom jeweiligen Einstellvorgang gelöst oder fest ist. Zum Einstellen eines Bremsmomentes für den Kalibriervorgang wird die Verbindung gelöst und das Stellglied und der Deckel sind gemeinsam um die feststehende Achse drehbar. Zum Einstellen eines Bremsmomentes für den Betrieb ist der Deckel fest mit der Achse verbunden, während das Stellglied relativ zum nun feststehenden Deckel verdrehbar ist. Damit ist es auf einfache Weise möglich, das Einstellen des Bremsmomentes bei beiden Einstellvorgängen mit nur einem einzigen Stellglied vorzunehmen.
Eine Schraubverbindung stellt eine einfache und sichere, mit geringem Aufwand lösbare Verbindung zwischen dem Deckel und der Achse dar.
Bei einer vorzugsweise als Rastverbindung ausgebildeten Kopplung zwischen Deckel und Stellglied ist die durch die Kopplung ausgeübte Kraft groß genug, um den Deckel bei Einstellen eines Bremsmomentes für den Kalibriervorgang beim Drehen des Stellgliedes um die feststehende Achse mitzunehmen, so dass kein Verdrehen zwischen Stellglied und Deckel stattfindet. Die durch die Rastverbindung aufbringbare Kraft ist klein genug, um beim Einstellen beziehungsweise Verstellen eines Bremsmomentes für den Betrieb das Stellglied relativ zum Deckel, der mit der feststehenden Achse fest verbundenen ist, von Hand verdrehen zu können. Durch die Kopplung bleibt das Stellglied in der jeweils eingestellten Position zum Deckel arretiert. Ein Stellring als Stellglied erlaubt eine kompakte Ausbildung der Magnethysteresebremse.

Vorzugsweise ist das Hystereseelement fest mit der Tragrolle verbunden und das Magnetelement ist an einem Halter befestigt, der drehfest zur feststehenden Achse und relativ zum Hystereseelement mittels der Verstelleinrichtung in Achsrichtung der feststehenden Achse verschiebbar ist. Vorteilhaft weisen das Stellglied und der Halter jeweils ein Gewinde auf, und die Gewinde greifen so ineinander, dass eine Drehung des Stellgliedes eine axiale Verschiebung des Halters bewirkt.

In einer alternativen Ausführung ist das Hystereseelement fest mit der Tragrolle verbunden und das Magnetelement an einem Halter befestigt, der um die feststehende Achse drehbar sowie drehfest mit dem Stellglied gekoppelt ist und der mittels der Verstelleinrichtung relativ zum Hystereseelement in Achsrichtung der Achse verschiebbar ist. Vorteilhaft umfasst die Verstelleinrichtung eine von der Achse getragene Kurvenscheibe, die mindestens eine Rampe aufweist, wobei der Halter sich auf der Rampe abstützt und die Kurvenscheibe so ausgebildet und angeordnet ist, dass eine Drehung des Halters eine axiale Verschiebung des Halters bewirkt. Vorzugsweise verläuft die Oberfläche der Rampe wendelförmig um die Achse. Bei der Verwendung einer Kurvenscheibe ist im Vergleich zu einem Gewinde eine deutlich geringere Verstellkraft erforderlich.

Diese erfindungsgemäßen Ausführungen erlauben ein sicheres und präzises Einstellen des Bremsmomentes der Magnethysteresebremse und sind einfach und raumsparend im Aufbau.

Liegt der Luftspalt zwischen dem Magnetelement und dem Hystereseelement in einer Ebene quer zur feststehenden Achse, ist eine kompakte Anordnung von Hysteresering und Magnetring möglich.

Die erfindungsgemäße Magnethysteresebremse ist kompakt und kostengünstig herstellbar und ermöglicht eine einfache Handhabung.

Die Erfindung wird anhand der Figuren näher erläutert.

Es zeigen:
- Fig. 1: einen Längsschnitt durch eine erfindungsgemäße Magnethysteresebremse,
- Fig. 2: einen Querschnitt A - A durch die Magnethysteresebremse der Figur 1,
- Fig. 3: eine perspektivische Ansicht des Querschnitts der Figur 2,
- Fig. 4: eine perspektivische Ansicht der Stirnseite der Magnethysteresebremse der Figur 1,
- Fig. 5: die für den Kalibriervorgang eingerichtete erfindungsgemäße Magnethysteresebremse,
- Fig. 6: einen Längsschnitt durch eine Magnethysteresebremse mit Kurvenscheibe,
- Fig. 7: die Kurvenscheibe der Fig. 6 in perspektivischer Ansicht.

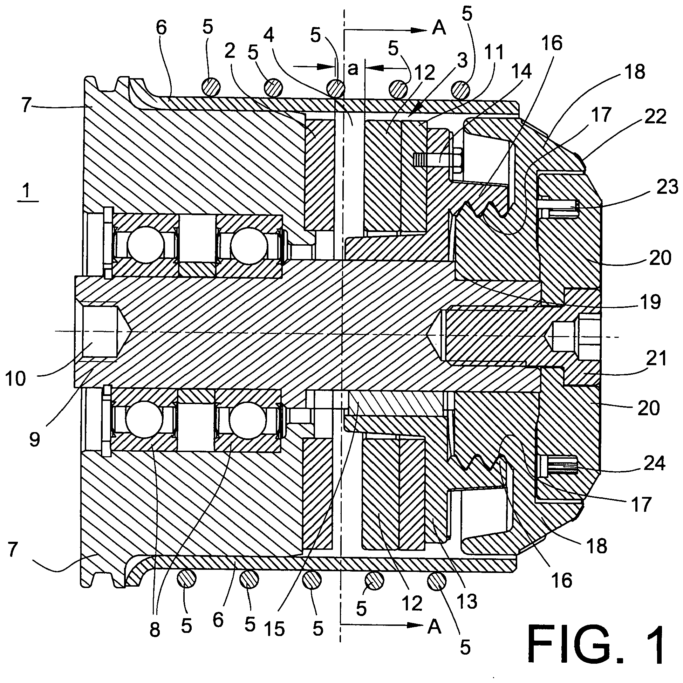

Figur 1 zeigt die Betriebstellung der erfindungsgemäßen Magnethysteresebremse 1. Die Magnethysteresebremse 1 weist ein als Hysteresering 2 ausgebildetes Hystereseelement und ein Magnetelement 3 auf. Der Hysteresering 2 und das Magnetelement 3 sind durch einen Luftspalt 4 von einander beabstandet.

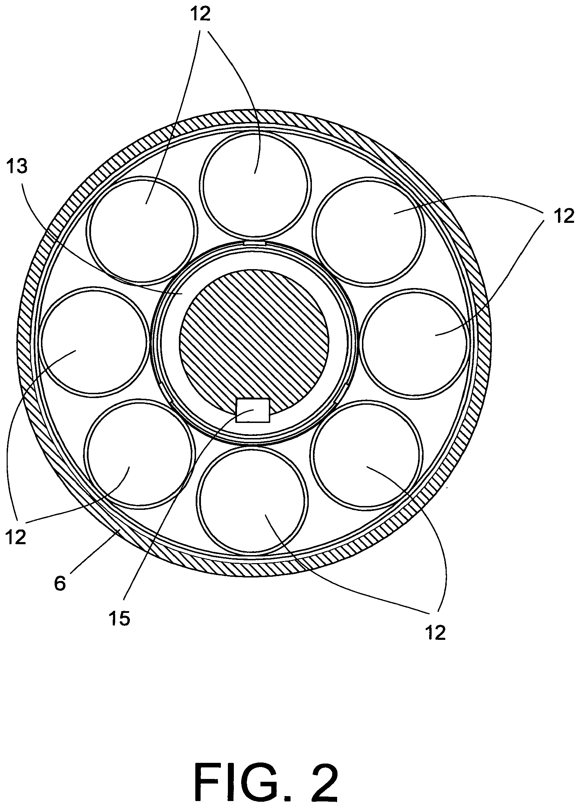

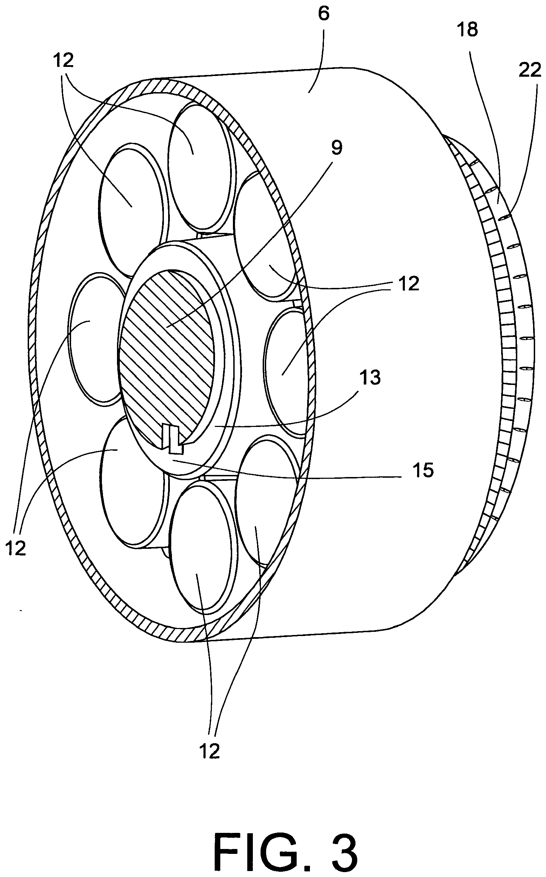

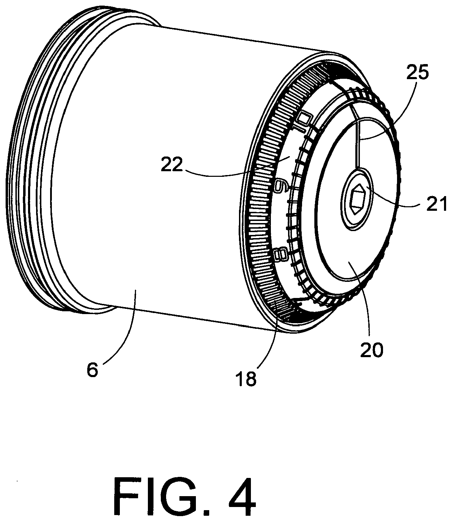

Der Abstand a zwischen Hysteresering 2 und Magnetelement 3 ist mittels einer Verstelleinrichtung veränderbar. Je geringer der Abstand a ist, desto größer ist das Bremsmoment, mit dem die Magnethysteresebremse 1 das laufende Garn 5 beaufschlagt. Das laufende Garn 5 liegt in einer oder, wie in Figur 1 dargestellt, in mehreren Umschlingungen auf der Mantelhülse 6, die mit der Tragrolle 7 drehfest verbunden ist. Die Tragrolle 7 ist mittels zweier Kugellager 8 auf der Achse 9 drehbar gelagert. Dem laufenden Garn 5 wird eine gleichbleibende Fadenspannung erteilt, die in ihrer Höhe abhängig vom eingestellten Bremsmoment ist. Die feststehende Achse 9 kann mittels einer Gewindebohrung 10 an einem ortsfesten Maschinenteil einer Textilmaschine, wie zum Beispiel einem Tragarm oder einem Gestellteil, durch eine Schraubverbindung befestigt werden. Der Hysteresering 2 ist durch Klebung mit der Tragrolle 7 fest verbunden. Das Magnetelement 3 umfasst eine Polscheibe 11 und als Rundmagnete 12 ausgebildete Dauermagnete, die auf der Polscheibe 11 fixiert sind. Die Rundmagnete 12 sind symmetrisch um die Achse 9 herum angeordnet, wie in den Figuren 2 und 3 gezeigt. Das Magnetelement 3 ist auf einem Halter 13 mittels Schrauben 14 befestigt. Der Halter 13 ist axial auf der Achse 9 verschiebbar. Eine Passfeder 15 sichert den Halter 13 gegen Verdrehen auf der Achse 9. Der Halter 13 weist ein Innengewinde 16 auf, das in das Gewinde einer Gewindespindel 17 greift. Die Gewindespindel 17 ist Teil eines als Stellring 18 ausgebildeten Stellglieds. Der Stellring 18 ist auf der Achse 9 drehbar und auf dieser axial nicht verschiebbar. Eine axiale Bewegung des Stellrings 18 wird auf der einen Seite durch den Absatz 19 der Achse 9 und auf der anderen Seite durch den Deckel 20 verhindert. Sowohl der Deckel 20 als auch der Stellring 18 bestehen aus Kunststoff. In der Darstellung der Figur 1 ist der Deckel 20 mittels einer Innensechskantschraube 21 am freien Ende der Achse 9 fixiert. Der Stellring 18 weist eine Skala 22 auf und ist gegen den Deckel 20 verdrehbar. Mittels einer Rasterung kann die jeweilige Position des Stellrings 18 reproduzierbar eingestellt werden. Der Deckel 20 umfasst Rillen 24, die einem Innenzahnkranz ähnlich umlaufend angeordnet sind. Eine federnde Zunge 23 des Stellrings 18 greift in die Rillen 24 ein. Mit der Rastverbindung, die durch den Eingriff der federnden Zunge 23 in die Rillen 24 gebildet wird, sind Kopplung Stellring 18 und Deckel 20 gekoppelt. Der Widerstand, den die Kopplung dem manuellen Drehen des Stellrings 18 entgegensetzt, ist geringfügig und leicht zu überwinden. Die Zunge 23 rastet beim Beenden der Drehung des Stellrings 18 jeweils in einer Rille 24 ein. Das Einrasten erlaubt eine exakte Reproduzierbarkeit der gewählten Einstellung des Bremsmomentes. Die Skala 22 bildet zusammen mit einem auf dem Deckel 20 aufgebrachten Markierungspfeil 25 eine Anzeigeeinrichtung. Der Markierungspfeil 25 zeigt auf der Skala 22 die Höhe des jeweils eingestellten Bremsmomentes an. Figur 1 stellt den Betriebszustand der Magnethysteresebremse 1 dar, in dem das Bremsmoment der Magnethysteresebremse 1 auf einen gewünschten Wert einstellbar ist. Zur Einstellung wird der Stellring 18 so gedreht, dass der Markierungspfeil 25 auf den gewünschten Wert auf der Skala 22 weist. Wird der Stellring 18 in der Darstellung der Figur 4 entgegen dem Uhrzeigersinn verstellt, wird durch diese Drehung über die Gewindespindel 17 und das Innengewinde 16 der Halter 13 in der Darstellung der Figur 1 nach links verschoben. Dadurch wird der Abstand a, der die Breite des Luftspaltes 4 zwischen den Rundmagneten 12 und dem Hysteresering repräsentiert, geringer, die Schlupfleistung der Magnethysteresebremse 1 steigt an und das Bremsmoment der Magnethysteresebremse 1 wird größer. Dementsprechend wird das Bremsmoment bei Drehung des Stellrings 18 im Uhrzeigersinn kleiner, da die Verschiebung des Halters 13 nun den Abstand a vergrößert.

Die meisten Teile der Magnethysteresebremse 1 werden durch die rohrförmige Mantelhülse 6 umschlossen und geschützt.

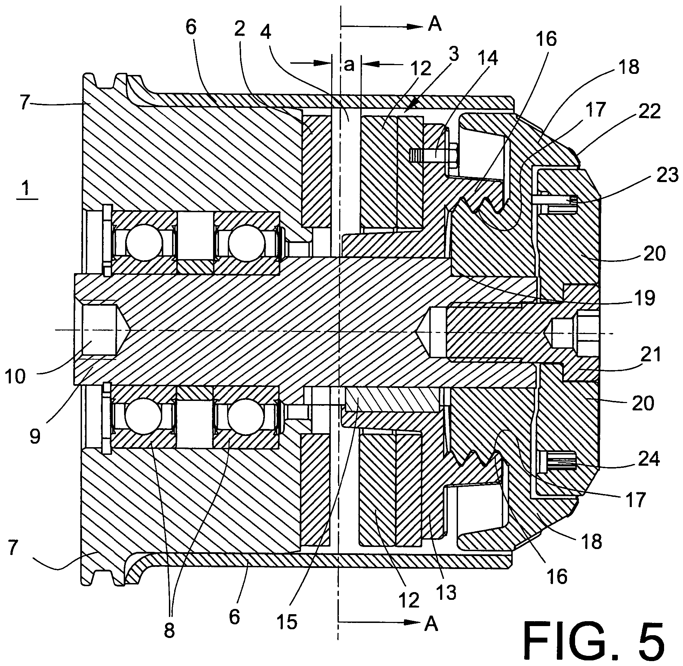

Figur 5 zeigt die Magnethysteresebremse 1 im für den Kalibriervorgang vorbereiteten Zustand. Um die Magnethysteresebremse 1 zu kalibrieren, wird für eine bestimmte Skalenposition, zum Beispiel die Position 1, ein bestimmtes Dreh- bzw. Bremsmoment vorgegeben. Das bestimmte Dreh- bzw. Bremsmoment beträgt zum Beispiel 1 Ncm für die Position 1. Der Stellring 18 wird nun so eingestellt, dass der Markierungspfeil 25 auf die Position 1 der Skala 22 zeigt. Anschließend wird die Innensechskantschraube 21, die den Deckel 20 bisher an der Achse 9 fixiert hat, soweit gelöst, dass der Deckel 20 um die Achse 9 drehbar ist. Wird der Stellring 18 nun gedreht, wird der Abstand a zwischen Magnetelement 3 und Hysteresering 2 und damit das von der Magnethysteresebremse 1 erzeugte Bremsmoment verändert. Die durch die Rillen 24 des Deckels 20 und die elastische Zunge 23 des Stellrings 18 als Rasteinrichtung ausgebildete Verbindung greift mit einer begrenzten Kraft an den Deckel 20 an. Diese Kraft reicht jedoch aus, um den Deckel 20 bei einer Drehung des Stellrings 18 synchron mitzudrehen. Während sich durch das Drehen des Stellrings 18 das Bremsmoment ändert, bleibt die gewählte Einstellung des Markierungspfeils 25 auf die bestimmte Position (im oben angeführten Beispiel die Position 1) erhalten. Das für diese Position vorgegebene Bremsmoment für das Kalibrieren der Magnethysteresebremse 1 wird mit Hilfe einer nicht dargestellten Drehmoment-Messvorrichtung exakt eingestellt. Die Innensechskantschraube 21 wird wieder angezogen und der Deckel 20 an der Achse 9 fixiert. Die Zuordnung des vorgegebenen Drehmomentes zu der bestimmten Position wird auf diese Weise fixiert. Das vorgegebene Drehmoment ist durch Einstellung auf diese Position reproduzierbar. Damit ist die Magnethysteresebremse 1 kalibriert und für den Betrieb vorbereitet.

Bei einer alternativen Durchführung des Kalibriervorgangs ist der Deckel 20 zunächst noch nicht montiert. Mit Hilfe einer Drehmomentmessvorrichtung wird das vorgegebene Bremsmoment durch Drehen des Stellrings 18 eingestellt. Anschließend wird der Deckel 20 so auf das freie Ende der Achse 9 aufgesetzt, dass der Markierungspfeil 25 auf die dem Bremsmoment entsprechende Position der Skala 22 weist. Beträgt der Wert des eingestellten Bremsmomentes beispielsweise 5 Ncm, weist der Markierungspfeil auf die Position 5 der Skala 22. Durch Festziehen der Innensechskantschraube 21 ist der Deckel 20 an der Achse 9 fixiert und die Magnethysteresebremse 1 kalibriert.

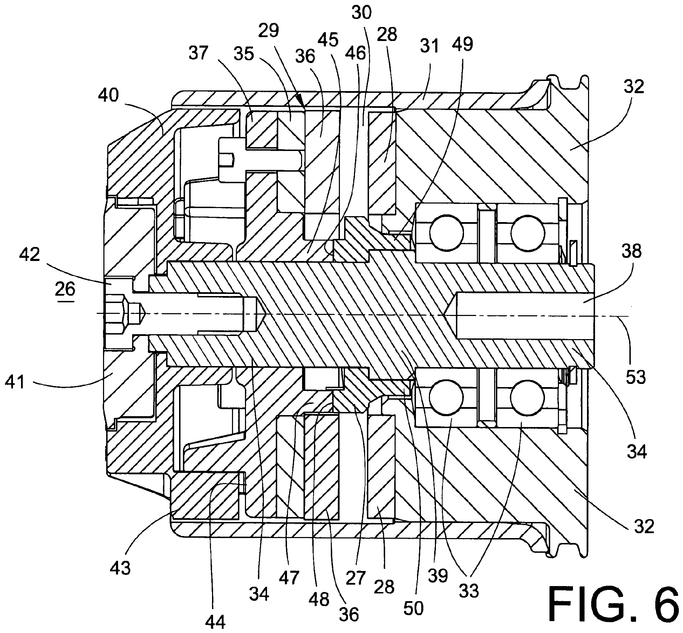

Figur 6 zeigt eine Magnethysteresebremse 26, die eine Kurvenscheibe 27 aufweist, in Betriebsstellung. Die Magnethysteresebremse 26 umfasst ein als Hysteresering 28 ausgebildetes Hystereseelement und ein Magnetelement 29, die durch einen Luftspalt 30 axial von einander beabstandet sind. Das Magnetelement 29 ist auf einem Halter 37 befestigt. Der axiale Abstand zwischen Hysteresering 28 und Magnetelement 29 ist mittels einer Verstelleinrichtung unter Verwendung der Kurvenscheibe 27 einstellbar. Das nicht dargestellte laufende Garn liegt in einer oder in mehreren Umschlingungen auf der Mantelhülse 31. Die Mantelhülse 31 ist mit der Tragrolle 32 drehfest verbunden, die mittels zweier Kugellager 33 auf der Achse 34 drehbar gelagert ist. Der Hysteresering 28 ist mit der Tragrolle 32 fest verbunden. Das Magnetelement 29 umfasst eine Polscheibe 35 und als Rundmagnete 36 ausgebildete Dauermagnete, die auf der Polscheibe 35 fixiert sind. Die mittels einer in die Gewindebohrung 38 eingedrehten, nicht dargestellten Schraube zum Beispiel an einem Tragarm oder einem Gestellteil einer Textilmaschine fixierte Achse 34 weist einen umlaufenden Bund 39 auf. Die Achse 34 trägt die Kurvenscheibe 27, den Halter 37 und ein als Stellring 40 ausgebildetes Stellglied.

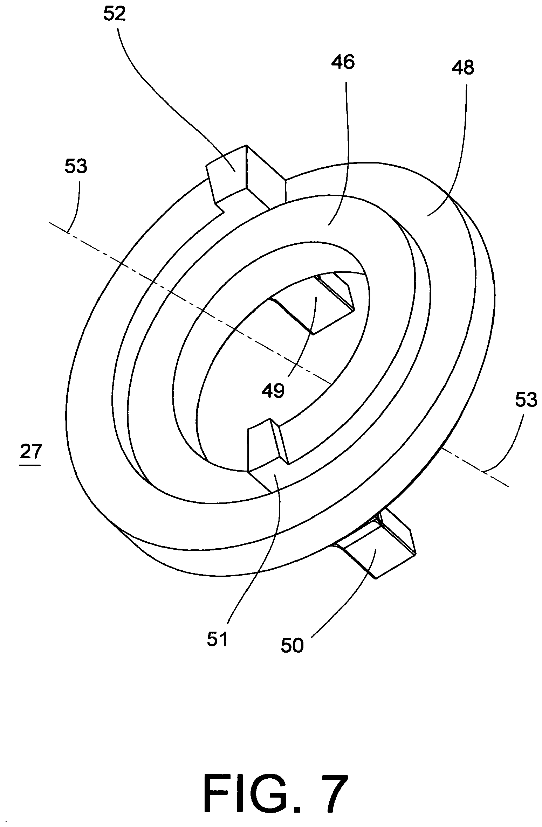

An der Gewindebohrung 38 gegenüberliegenden freien Ende der Achse 34 ist ein Deckel 41 mittels einer Innensechskantschraube 42 befestigt. Der Deckel 41 trägt eine Markierung und der Stellring 40 trägt eine Skala in der in Fig. 4 dargestellten Weise. Die Skala des Stellrings 40 bildet zusammen mit der auf dem Deckel 41 aufgebrachten Markierung eine Anzeigeeinrichtung. Der Stellring 40 ist auf der Achse 34 drehbar gelagert. Solange der Deckel 41 mittels der Innensechskantschraube 42 fixiert ist, ist der Stellring 40 nicht axial verschiebbar. Der Halter 37 ist mittels einer Nase 43 des Stellrings 40, die in eine Nut 44 des Halters 37 greift, mit dem Stellring 40 drehfest verbunden, ist jedoch axial zum Stellring 40 verschiebbar und um die Achse 34 drehbar. Dabei liegt der Halter 37 unter der Wirkung der Magnetkraft zwischen den Rundmagneten 36 und dem Hysteresering 28 mit dem Nocken 45 auf der Oberfläche der inneren Rampe 46 und mit dem Nocken 47 auf der Oberfläche der äußeren Rampe 48 der Kurvenscheibe 27 auf. Die Oberfläche der inneren Rampe 46 und die Oberfläche der äußeren Rampe 48 der Kurvenscheibe 27 verlaufen wendelförmig um die Achse 34 bzw. um die Mittelachse 53 wie in der Figur 7 gezeigt.
Die Kurvenscheibe 27 ist mittels der Zapfen 49, 50 drehfest mit der Achse 34 verbunden und stützt sich unter der Wirkung der durch den Halter 37 aufgebrachten Magnetkraft axial gegen den Bund 39 der Achse 34 ab. Die Anschläge 51, 52 begrenzen den Verstellweg der Nocken 45, 47 auf der Oberfläche der inneren Rampe 46 und der Oberfläche der äußeren Rampe 48 der Kurvenscheibe 27.

Zum Einstellen eines bestimmten Dreh- bzw. Bremsmomentes wird der Stellring 40 um die Mittelachse 53 gedreht. Bei einer Drehung des Stellrings 40 sowie des damit drehfest verbundenen Halters 37 dreht sich der Halter 37 relativ zur Kurvenscheibe 27, wobei die Zapfen 49, 50 auf der Oberfläche der inneren Rampe 46 und der Oberfläche der äußeren Rampe 48 wie auf einer schiefen Ebene gleiten und der Halter 37 in Richtung der Mittelachse 53 auf der Achse 34 verschoben wird. Wird der Stellring 40 in der Darstellung der Figur 6 von links betrachtet im Uhrzeigersinn gedreht, vergrößert sich der axiale Abstand zwischen Hysteresering 28 und Magnetelement 29 beziehungsweise der Luftspalt 30 und das auf das Garn wirkende Dreh- bzw. Bremsmoment wird kleiner. Bei einer Drehung in entgegengesetzter Richtung wird der Halter 37 axial von der als Rückholkraft wirkenden Magnetkraft bewegt und der Luftspalt 30 wird kleiner. Der kleiner gewordene Luftspalt 30 führt zu einem größeren Dreh- bzw. Bremsmoment. Zum Kalibrieren der Magnethysteresebremse 26 wird analog zum bereits im Zusammenhang mit der Ausführung der Magnethysteresebremse 1 beschriebenen Kalibriervorgang vorgegangen. Der Deckel 41 ist zunächst mittels der Innensechskantschraube 42 an der Achse 34 fixiert. Der Stellring 40 wird so eingestellt, dass die Markierung des Deckels 41 auf eine bestimmte Position der Skala des Stellrings 40 zeigt. Die Innensechskantschraube 42 wird nun soweit gelöst, dass der Deckel 41 um die Achse 34 gedreht werden kann. Durch Drehung des Stellrings 40 wird das von der Magnethysteresebremse 26 erzeugte Bremsmoment verändert.
Eine als Rasteinrichtung ausgebildete Verbindung zwischen Stellring 40 und Deckel 41 dreht den Deckel 41 bei gelöster Innensechskantschraube 42 synchron mit, so dass die gewählte Einstellung der Markierung auf die bestimmte Position erhalten bleibt. Das für diese bestimmte Position vorgegebene Dreh- bzw. Bremsmoment wird mit Hilfe einer nicht dargestellten Drehmoment-Messvorrichtung exakt eingestellt. Die Innensechskantschraube 42 wird wieder angezogen und der Deckel 41 wieder an der Achse 34 fixiert. Die Zuordnung des vorgegebenen Dreh- bzw. Bremsmomentes zu der bestimmten Position ist nun erfolgt und die Magnethysteresebremse 26 ist kalibriert.

Die bei einer erfindungsgemäßen Magnethysteresebremse vorhandene mechanische Einrichtung zur Veränderung des Bremsmomentes ist auf diese Weise sowohl für das Einstellen des Bremsmomentes auf einen gewünschten Wert für den Betrieb der Magnethysteresebremse als auch für das Einstellen des Bremsmomentes beim Kalibrieren geeignet.

## Patentansprüche

1. Verfahren zum Einstellen eines Bremsmomentes einer permanent erregten Magnethysteresebremse mittels mechanisch wirkendem Stellglied, wobei die Magnethysteresebremse (1, 26) eine Tragrolle (7, 32), die um eine feststehende Achse (9, 34) rotierbar ist, aufweist,
**dadurch gekennzeichnet,**
**dass** sowohl das Einstellen des Bremsmomentes auf einen gewünschten Wert für den Betrieb der Magnethysteresebremse (1, 26) als auch das Einstellen des Bremsmomentes beim Kalibrieren der Magnethysteresebremse (1, 26) mittels Betätigung desselben Stellgliedes (18, 40) vorgenommen wird,
**dass** die Magnethysteresebremse (1, 26) eine Verbindung zwischen einem Deckel (20, 41) und der Achse (9, 34) aufweist, die in Abhängigkeit vom jeweiligen Einstellvorgang gelöst oder fest ist,
**dass** zum Einstellen eines Bremsmomentes für den Kalibiervorgang die Verbindung gelöst wird und das Stellglied (18, 40) und der Deckel (20, 41) gemeinsam um die feststehende Achse (9, 34) gedreht werden und
**dass** zum Einstellen eines Bremsmomentes für den Betrieb der Deckel (20, 41) fest mit der Achse (9, 34) verbunden ist, während das Stellglied relativ zum nun feststehenden Deckel (20, 41) verdreht wird ist.

2. Permanent erregte Magnethysteresebremse zur Durchführung des Verfahrens nach Anspruch 1, mit einer Tragrolle (7, 32), die um eine feststehende Achse (9, 34) rotierbar ist, mit mindestens einem Magnetelement (3, 29) und mindestens einem Hystereseelement (2, 28), wobei das Magnetelement (3, 29) und das Hystereseelement (2, 28) durch einen Luftspalt (4, 30) voneinander getrennt sind, mit einer Verstelleinrichtung, mittels der die Lage von Magnetelement (3, 29) und Hystereseelement (2, 28) relativ zueinander verstellbar sind und damit das Drehmoment verstellbar ist, mit dem die Tragrolle (7, 32) als Bremsmoment beaufschlagt wird, wobei die Verstelleinrichtung ein um die Achse (9, 34) drehbares Stellglied (18, 40) umfasst,
**dadurch gekennzeichnet,**
**dass** die Magnethysteresebremse (1, 26) nur ein einziges Stellglied (18, 40) aufweist, mit dem das Bremsmoment sowohl für den Betrieb der Magnethysteresebremse (1, 26) als auch beim Kalibrieren der Magnethysteresebremse (1, 26) einstellbar ist,
**dass** die Magnethysteresebremse (1, 26) eine Verbindung zwischen einem Deckel (20, 41) und der Achse (9, 34) aufweist, die in Abhängigkeit vom jeweiligen Einstellvorgang gelöst oder fest ist,
**dass** zum Einstellen eines Bremsmomentes für den Kalibiervorgang die Verbindung gelöst wird und das Stellglied (18, 40) und der Deckel (20, 41) gemeinsam um die feststehende Achse (9, 34) drehbar sind und
**dass** zum Einstellen eines Bremsmomentes für den Betrieb der Deckel (20, 41) fest mit der Achse (9, 34) verbunden ist, während das Stellglied relativ zum nun feststehenden Deckel (20, 41) verdrehbar ist.

3. Magnethysteresebremse nach Anspruch 2, **dadurch gekennzeichnet, dass** das Stellglied (18, 40) eine Skala (22) aufweist und dass der Deckel (20, 41) eine Markierung (25) trägt, und dass die Skala (22) und die Markierung (25) so angeordnet sind, dass sie als Anzeigeeinrichtung zusammenwirken.

4. Magnethysteresebremse nach einem der Ansprüche 2 oder 3, **dadurch gekennzeichnet, dass** die Verbindung zwischen Deckel (20, 41) und Achse (9, 34) eine Schraubverbindung ist.

5. Magnethysteresebremse nach Anspruch 2, 3 oder 4, **dadurch gekennzeichnet, dass** die Magnethysteresebremse (1, 26) eine Kopplung zwischen dem Deckel (20, 41) und dem Stellglied (18, 40) aufweist, die als Rasteinrichtung ausgebildet ist.

6. Magnethysteresebremse nach einem der Ansprüche 2 bis 5, **dadurch gekennzeichnet, dass** das Stellglied (18, 40) ein Stellring (18, 40) ist.

7. Magnethysteresebremse nach einem der Ansprüche 2 bis 6, **dadurch gekennzeichnet, dass** das Hystereseelement (2) fest mit der Tragrolle (7) verbunden ist und das Magnetelement (3) an einem Halter (13) befestigt ist, der drehfest zur feststehenden Achse (9) und relativ zum Hystereseelement (2) mittels der Verstelleinrichtung in Achsrichtung der feststehenden Achse (9) verschiebbar ist.

8. Magnethysteresebremse nach Anspruch 7, **dadurch gekennzeichnet, dass** das Stellglied (18) und der Halter (13) jeweils ein Gewinde aufweisen und dass die Gewinde so ineinander greifen, dass eine Drehung des Stellgliedes (18) eine axiale Verschiebung des Halters (13) bewirkt.

9. Magnethysteresebremse nach einem der Ansprüche 2 bis 6, **dadurch gekennzeichnet, dass** das Hystereseelement (28) fest mit der Tragrolle (32) verbunden ist und das Magnetelement (29) an einem Halter (37) befestigt ist, der um die feststehende Achse (34) drehbar und drehfest mit dem Stellglied (40) gekoppelt ist und der mittels der Verstelleinrichtung relativ zum Hystereseelement (28) in Achsrichtung der Achse (34) verschiebbar ist.

10. Magnethysteresebremse nach Anspruch 9, **dadurch gekennzeichnet, dass** die Verstelleinrichtung eine von der Achse (34) getragene Kurvenscheibe (27) umfasst, dass die Kurvenscheibe (27) mindestens eine Rampe (46, 48) aufweist, dass der Halter (37) sich auf der Rampe (46, 48) abstützt und dass die Kurvenscheibe (27) so ausgebildet und angeordnet ist, dass eine Drehung des Halters (37) eine axiale Verschiebung des Halters (37) bewirkt.

11. Magnethysteresebremse nach Anspruch 10, **dadurch gekennzeichnet, dass** die Oberfläche der Rampe (46, 48) wendelförmig um die Achse (34) verläuft.

12. Magnethysteresebremse nach einem der Ansprüche 2 bis 11, **dadurch gekennzeichnet, dass** der Luftspalt (4, 30) zwischen dem Magnetelement (3, 29) und dem Hystereseelement (2, 28) in einer Ebene quer zur feststehenden Achse (9, 34) liegt.

## Claims

1. Method for setting a braking torque of a permanently excited magnetic hysteresis brake by means of a mechanically acting actuator, wherein the magnetic hysteresis brake (1, 26) comprises a support cylinder (7, 32), which can be rotated around a fixed axis (9, 34),
**characterised in that**
the setting of the braking torque to a desired value for operating the magnetic hysteresis brake (1, 26) as well as the setting of the braking torque when calibrating the magnetic hysteresis brake (1, 26) is realised by activating the same actuator (18, 40),
the magnetic hysteresis brake (1, 26) comprises a connection between a cover (20, 41) and the axis (9, 34) which is disconnected or connected depending on the relevant setting process,
the connection is disconnected for setting a braking torque for the calibration process and the actuator (18, 40) and the cover (20, 41) are rotated together around the fixed axis (9, 34), and
**in that** the cover (20, 41) is firmly connected with the axis (9, 34) for setting a braking torque for operation, whilst the actuator is rotated relative to the now fixed cover (20, 41).

2. Permanently excited magnetic hysteresis brake for carrying out the method according to claim 1, with a support cylinder (7, 32) that can be rotated around a fixed axis (9, 34), with at least one magnet element (3, 29) and at least one hysteresis element (2, 28), wherein the magnet element (3, 29) and the hysteresis element (2, 28) are separated from each other by an air gap (4, 30), with a displacement means, with which the position of magnet element (3, 29) and hysteresis element (2, 28) can be changed relative to each other, and the torque applied to the support cylinder (7, 32) as a braking torque can thus be changed, wherein the displacement means comprises an actuator (18, 40) that can be rotated around the axis (9, 34),
**characterised in that**
the magnetic hysteresis brake (1, 26) comprises just a single actuator (18, 40), with which the braking torque can be set for operating the magnetic hysteresis brake (1, 26) as well as for calibrating the magnetic hysteresis brake (1, 26),
the magnetic hysteresis brake (1, 26) comprises a connection between a cover (20, 41) and the axis (9, 34), which is connected or disconnected depending on the relevant setting process,
the connection if disconnected for setting a braking torque for the calibration process and the actuator (18, 40) and the cover (20, 41) are rotated together around the fixed axis (9, 34), and
the cover (20, 41) is firmly connected with the axis (9, 34) for setting a braking torque for operation, whilst the actuator is rotated relative to the now fixed cover (20, 41).

3. Magnetic hysteresis brake according to claim 2, **characterised in that** the actuator (18, 40) has a scale (22) and the cover (20, 41) bears a marking (25), and **in that** the scale (22) and the marking (25) are arranged in such a way that they cooperated as a display means.

4. Magnetic hysteresis brake according to one of the claims 2 or 3, **characterised in that** the connection between the cover (20, 41) and axis (9, 34) is a screw connection.

5. Magnetic hysteresis brake according to claim 2, 3 or 4, **characterised in that** the magnetic hysteresis brake (1, 26) comprises a coupling between the cover (20, 41) and the actuator (18, 40), which serves as an arresting means.

6. Magnetic hysteresis brake according to one of the claims 2 to 5, **characterised in that** the actuator (18, 40) is a adjusting ring (18, 40).

7. Magnetic hysteresis brake according to one of the claims 2 to 6, **characterised in that** the hysteresis element (2) is firmly connected with the support cylinder (7), and the magnet element (3) is fixed to a holder (13) that is displaced rotation-resistantly to the fixed axis (9) and relative to the hysteresis element (2) by means of the displacement means in axis direction of the fixed axis (9).

8. Magnetic hysteresis brake according to claim 7, **characterised in that** the actuator (18) and the holder (13) each have a thread and that the threads engage in such a way that a rotation of the actuator (18) will effect an axial displacement of the holder (13).

9. Magnetic hysteresis brake according to one of the claims 2 to 6, **characterised in that** the hysteresis element (28) is firmly connected with the support cylinder (32) and the magnet element (29) is fixed to a holder (37), which can be rotated around the fixed axis (34) and is rotation-resistantly coupled with actuator (40), and which is displaced by means of the displacement means relative to the hysteresis element (28) in axis direction of the axis (34).

10. Magnetic hysteresis brake according to claim 9, **characterised in that** the displacement means comprises a cam disk (27) supported by the axis (34), that the cam disk (27) comprises at least one ramp (46, 48), that the holder (37) supports itself on the ramp (46, 48) and that the cam disk (27) is designed and arranged in such a way that a rotation of the holder (37) effects an axial displacement of the holder (37).

11. Magnetic hysteresis brake according to claim 10, **characterised in that** the surface of the ramp (46, 48) extends helically around the axis (34).

12. Magnetic hysteresis brake according to one of the claims 2 to 11, **characterised in that** the air gap (4, 30) between the magnet element (3, 29) and the hysteresis element (2, 28) lies at a plane transverse to the fixed axis (9, 34).

## Revendications

1. Procédé de réglage d'un couple de freinage d'un frein à hystérésis magnétique à excitation permanente au moyen d'un organe de réglage à action mécanique, lequel frein à hystérésis magnétique (1, 26) présente un galet porteur (7, 32) qui peut tourner autour d'un axe fixe (9, 34),
**caractérisé en ce**
**qu'**aussi bien le réglage du couple de freinage à une valeur souhaitée pour le fonctionnement du frein à hystérésis magnétique (1, 26) que le réglage du couple de freinage lors de l'étalonnage du frein à hystérésis magnétique (1, 26) sont effectués par actionnement du même organe de réglage (18, 40),
**que** le frein à hystérésis magnétique (1, 26) présente une liaison entre un couvercle (20, 41) et l'axe (9, 34), qui est desserrée ou serrée en fonction de l'opération de réglage respective,
**que** pour le réglage d'un couple de freinage pour l'opération d'étalonnage, la liaison est desserrée et l'organe de réglage (18, 40) et le couvercle (20, 41) tournent ensemble autour de l'axe fixe (9, 34) et
**que** pour le réglage d'un couple de freinage pour le fonctionnement, le couvercle (20, 41) est rendu solidaire de l'axe fixe (9, 34) tandis que l'organe de réglage tourne par rapport au couvercle (20, 41) à présent fixe.

2. Frein à hystérésis magnétique à excitation permanente pour mettre en oeuvre le procédé selon la revendication 1, avec un galet porteur (7, 32) qui peut tourner autour d'un axe fixe (9, 34), avec au moins un élément magnétique (3, 29) et au moins un élément à hystérésis (2, 28), l'élément magnétique (3, 29) et l'élément à hystérésis (2, 28) étant séparés l'un de l'autre par un espace d'air (4, 30), avec un dispositif de réglage au moyen duquel la position relative de l'élément magnétique (3, 29) et de l'élément à hystérésis (2, 28) est réglable et donc le couple auquel le galet porteur (7, 32) est soumis en tant que couple de freinage est réglable, le dispositif de réglage comprenant un organe de réglage (18, 40) pouvant tourner autour de l'axe (9, 34),
**caractérisé en ce**
**que** le frein à hystérésis magnétique (1, 26) ne présente qu'un seul organe de réglage (18, 40) avec lequel le couple de freinage est réglable aussi bien pour le fonctionnement du frein à hystérésis magnétique (1, 26) que pour l'étalonnage du frein à hystérésis magnétique (1, 26),
**que** le frein à hystérésis magnétique (1, 26) présente une liaison entre un couvercle (20, 41) et l'axe (9, 34), qui est desserrée ou serrée en fonction de l'opération de réglage respective,
**que** pour le réglage d'un couple de freinage pour l'opération d'étalonnage, la liaison est desserrée et l'organe de réglage (18, 40) et le couvercle (20, 41) peuvent tourner ensemble autour de l'axe fixe (9, 34) et
**que** pour le réglage d'un couple de freinage pour le fonctionnement, le couvercle (20, 41) est rendu solidaire de l'axe fixe (9, 34) tandis que l'organe de réglage peut tourner par rapport au couvercle (20, 41) à présent fixe.

3. Frein à hystérésis magnétique selon la revendication 2, **caractérisé en ce que** l'organe de réglage (18, 40) présente un cadran (22) et que le couvercle (20, 41) porte un marquage (25), et que le cadran (22) et le marquage (25) sont disposés de façon à coopérer en tant que dispositif indicateur.

4. Frein à hystérésis magnétique selon l'une des revendications 2 ou 3, **caractérisé en ce que** la liaison entre le couvercle (20, 41) et l'axe (9, 34) est une liaison par vis.

5. Frein à hystérésis magnétique selon l'une des revendications 2, 3 ou 4, **caractérisé en ce que** le frein à hystérésis magnétique (1, 26) présente un accouplement entre le couvercle (20, 41) et l'organe de réglage (18, 40), qui est réalisé sous la forme d'un dispositif d'encliquetage.

6. Frein à hystérésis magnétique selon l'une des revendications 2 à 5, **caractérisé en ce que** l'organe de réglage (18, 40) est une bague de réglage (18, 40).

7. Frein à hystérésis magnétique selon l'une des revendications 2 à 6, **caractérisé en ce que** l'élément à hystérésis (2) est solidaire du galet porteur (7) et l'élément magnétique (3) est fixé à un support (13) qui est bloqué en rotation par rapport à l'axe fixe (9) et peut coulisser par rapport à l'élément à hystérésis (2) dans la direction de l'axe fixe (9) au moyen du dispositif de réglage.

8. Frein à hystérésis magnétique selon la revendication 7, **caractérisé en ce que** l'organe de réglage (18) et le support (13) présentent chacun un filetage et que les filetages s'engagent l'un dans l'autre de telle sorte qu'une rotation de l'organe de réglage (18) provoque un coulissement axial du support (13).

9. Frein à hystérésis magnétique selon l'une des revendications 2 à 6, **caractérisé en ce que** l'élément à hystérésis (28) est solidaire du galet porteur (32) et l'élément magnétique (29) est fixé à un support (37) qui peut tourner autour de l'axe fixe (34) et est couplé de manière solidaire en rotation à l'organe de réglage (40) et qui peut coulisser par rapport à l'élément à hystérésis (28) dans la direction de l'axe (34) au moyen du dispositif de réglage.

10. Frein à hystérésis magnétique selon la revendication 9, **caractérisé en ce que** le dispositif de réglage comprend un disque à came (27) porté par l'axe (34), que le disque à came (27) présente au moins une rampe (46, 48), que le support (37) s'appuie sur la rampe (46, 48) et que le disque à canne (27) est conçu et disposé de telle sorte qu'une rotation du support (37) provoque un coulissement axial du support (37).

11. Frein à hystérésis magnétique selon la revendication 10, **caractérisé en ce que** la surface de la rampe (46, 48) s'étend en forme en forme d'hélice autour de l'axe (34).

12. Frein à hystérésis magnétique selon l'une des revendications 2 à 11, **caractérisé en ce que** l'espace d'air (4, 30) entre l'élément magnétique (3, 29) et l'élément à hystérésis (2, 28) est situé dans un plan transversalement à l'axe fixe (9, 34).
